# EUROPEAN PATENT SPECIFICATION

(11) **EP 3 633 792 B1**
(45) Date of publication and mention of the grant of the patent: **16.08.2023**
(21) Application number: 19201149.2
(22) Date of filing: 02.10.2019
(51) Int. Cl.: H01R 4/18, H01R 43/02, H01R 43/048, B23K 1/00, H01R 43/042, B23K 3/047, H01R 43/058, B23K 101/42

(54) **DEVICE FOR SOLDERING AN ELECTRICAL CONDUCTOR WITH A CONNECTION DEVICE**
VORRICHTUNG ZUM LÖTEN EINES ELEKTRISCHEN LEITERS MIT EINER VERBINDUNGSVORRICHTUNG
DISPOSITIF DE SOUDURE D'UN CONDUCTEUR ÉLECTRIQUE À UN DISPOSITIF DE CONNEXION

(30) Priority: 05.10.2018 FR 1859248
(43) Date of publication of application: 08.04.2020
(73) Proprietor: Tyco Electronics France SAS, 95300 Pontoise (FR)
(72) Inventor: BEDNAREK, Alain, 95640 Neuilly en Vexin (FR); BOILLEAU, Pascal, 95830 Frémécourt (FR); FERRIEZ, Daniel, 95800 Cergy (FR); COUFFEAU, Antoine, 95710 Bray-et-Lû (FR); ALBRIEUX, Pacal, 27170 Goupillières (FR)
(74) Representative: Grünecker Patent- und Rechtsanwälte PartG mbB

(56) References cited:
- EP-A1- 2 960 991
- WO-A1-2010/026173
- JP-A- H09 115 558
- JP-A- 2017 022 065
- US-A1- 2001 020 540
- US-A1- 2015 099 406
- US-A1- 2015 174 691

## Description

The present invention relates to a device for soldering an electrical conductor with a connection device.

Such a device makes it possible to solder and crimp the electrical conductor by plastically deforming the connection device around the electrical conductor.

Such a device is described by European patent application EP 2 996 199 A1, and comprises at least one deformation unit, as well as an anvil with an electrical contact area towards the top of the anvil on which the electrical conductor and the connection device are intended to be placed. The anvil is capable of making an electrical current circulate through the electrical conductor and the connection device. Thus, the heat necessary to create the solder is generated by Joule effect at the junction of the electrical connector and the connection device towards the top of the anvil. JPH09115558 discloses a structure which includes an outer wiring material which is directly connected to an inner wiring material. A through hole is formed at the connection part of inner and outer wiring material. A pair of walls guide the inner and outer wiring material to both sides of the through hole. The inner and outer wiring materials are welded by ultrasonic welding or resistance welding.

This device makes it possible to obtain reliable and stable electrical connections, even when the electrical wires to be connected are small and/or made of aluminium or copper, or of copper and aluminium alloys.

However, such devices consume a lot of electricity to reach a sufficiently high temperature to be able to perform the soldering. Indeed, such a device is usually supplied by a current generator with an electrical current in the range of 500 amps to 750 amps for an applied voltage in the range of 1 to 2 volts for some hundreds of milliseconds. However, it turns out that, in certain situations, leakages of electrical currents and/or electrical arcs from the anvil with other conductive elements have been observed, and are usually linked to the deterioration of the anvil's insulation, specifically in locations in which the anvil is subjected to mechanical stress. These electrical leakages, in particular, prevent the heating by Joule effect from being limited to the contact area on which the electrical conductor and the connection device are placed, which increases the device's electrical energy requirements for allowing the contact area of the anvil to reach the temperature necessary for performing the soldering, which also, as a consequence, reduces the lifespan of the anvil. Furthermore, it turns out that the position of the anvil on the base plate may deviate from its initial fixing position over the duration of the use of the device, which may entail involuntary electrical contacts of the anvil with other parts of the plate.

Therefore, the object of the present invention is to reduce the risk of electrical leakage or electrical arcs of the current passing through the anvil, and thus to improve the concentration of heat at the contact area where the electrical conductor and the connection device are intended to be soldered.

The object of the present invention is achieved with a device for soldering an electrical conductor with a connection device according to claim 1. The risk of electrical leakage or electrical arc between the electrical current circulating in the anvil and the base plate is avoided by virtue of the supplementary electrical insulation of the anvil relative to the plate. Furthermore, the fact that the anvil is at least partially housed in the hole makes it possible to improve the stability and the robustness of the device for soldering, in particular compared to devices in which the anvil is placed on a surface of the plate. Indeed, the device according to the present invention makes it possible to prevent a risk of translation of the anvil on the surface of the plate, in particular towards electrically conductive parts of the plate, which increases the risk of deterioration and could lead to losses of electrical current from the anvil to the plate. The glue makes it possible, on the one hand, to fix the anvil to the base plate and, on the other hand, to electrically insulate the anvil from the base plate. Thus, one single means, in this case the glue, serves as the joining means and electrical insulation means. This makes it possible to advantageously reduce the number of elements and steps for manufacturing such a device for soldering.

The device for soldering an electrical conductor with a connection device according to the present invention can be further improved by virtue of the following embodiments.

According to another embodiment of the invention, the anvil may be constructed with at least two distinct portions such that a first portion of the anvil is housed in the through-hole of the base plate, and a second portion comprises an electrical contact area towards the top of the anvil on which the electrical conductor and the connection device are intended to be placed in relation to the base plate. Thus, because the first portion, which is housed in the hole of the base plate, is electrically insulated from the base plate, this contributes to limiting the leakages of current and thus to improving the concentration of electrical current, and thus of heat, at the contact area of the second portion of the anvil, where the soldering is carried out.

According to another embodiment of the invention, the anvil may comprise at least two portions formed integrally with the anvil such that the anvil is formed as a single piece, and such that a first portion of the anvil is housed in the through-hole of the base plate, and a second portion comprises an electrical contact area towards the top of the anvil on which the electrical conductor and the connection device are intended to be placed. Thus, the production of the anvil is simplified because the anvil may be formed in one single step.

According to another embodiment of the invention, the first portion of the anvil may have a shape which is complementary to the through-hole, such that the first portion of the anvil is retained in the through-hole by form-fit in the direction of insertion of the first portion of the anvil into the hole, in particular the first portion and/or the through-hole has a beveled or tapered shape, for example of the Morse cone type. Thus, when the first portion of the anvil is inserted in the direction of insertion into the hole, the form-fit permitted by the incline of the walls of the first portion and/or of the through-hole makes it possible to avoid the anvil passing through the through-hole. This facilitates assembly.

According to another embodiment of the invention, the anvil may be made of steel and at least the entirety of the lateral face or faces of the first portion of the anvil housed in the through-hole may be covered with an insulating coating, in particular made of ceramic. Since steel is a conducting material, the insulating coating, particularly made of ceramic, makes it possible to protect the anvil from electrical leakage or electrical arc with other conducting elements or units. Consequently, the electrical insulation of the anvil relative to the base plate is further improved, because the insulation is provided on the one hand by the insulating glue, which makes it possible to retain the first portion in the through-hole, and on the other hand by the insulating coating of the anvil. The superposition of insulating layers thus makes it possible to improve the reliability and the durability of the electrical insulation of the anvil with the base plate.

According to another embodiment of the invention, the through-hole may open out on one side and the other side of the base plate and is a hole with shoulders at least on one side of the base plate, such that the shoulders of the through-hole form, with the first portion of the anvil, gluing grooves at least partially filled with the insulating glue. Thus, the assembly is facilitated because the through-hole is created such that there will be the necessary space, in this case the gluing grooves, to apply the insulating glue.

According to another embodiment of the invention, the first portion and the second portion of the anvil may be joined to each other by a joining means, in particular by at least one fixing screw. The anvil may therefore comprise at least two portions which are not formed integrally with each other. The first portion of the anvil may thus be mounted on and fixed to the base plate before or after having been joined to the second portion of the anvil. Advantageously, one or the other of the two portions of the anvil may be replaced, in the event of deterioration for example, without having to change the anvil in its entirety.

According to another embodiment of the invention, the depth of the through-hole may be greater than the height of the first portion of the anvil, such that the first portion of the anvil may be positioned with an indent from each surface of the base plate. The indent of the first portion of the anvil housed in the through-hole on either side of the surface of the base plate makes it possible to avoid one part of the first portion protruding beyond the base surface and involuntarily generating an electrical arc with the surface of the base plate.

According to an embodiment not covered by the claimed invention but useful for its understanding, the object of the present invention can likewise be achieved by a base plate for a device for soldering an electrical conductor with a connection device, comprising a through-hole in which at least one portion of the anvil is housed and glued, such that the anvil is arranged so as to be electrically insulated from the base plate. Thus, the base plate makes it possible to fix the first portion of the anvil in the through-hole, and also to make it possible to electrically insulate a portion of the anvil via the glue which also serves as a fixing means.

Moreover, according to an embodiment not covered by the claimed invention but useful for its understanding, the object of the present invention can also be achieved by a device for soldering an electrical conductor with a connection device, comprising an anvil with an electrical contact area towards the top of the anvil on which the electrical conductor and the connection device are intended to be placed, the anvil being capable of making an electrical current circulate through the electrical conductor and the connection device; and a cutting unit capable of cutting a portion of the connection device towards the top of the anvil; such that the anvil and the cutting unit are at least partially distanced from each other at least at the top of the anvil in order to electrically insulate them from each other. As a consequence, a risk of leakage of electrical current or of electrical arc of the current circulating in the anvil with a unit of the connection device, such as the cutting unit, is reduced. Moreover, by distancing at least the top of the anvil from the cutting unit, this makes it possible to prevent abrasion between the top of the anvil and the cutting unit and the cut portion of the connection device at the potentially cutting edges. Thus, the risk of deterioration by friction is reduced at the top of the anvil. The reduction of the risk of deterioration of the anvil consecutively makes it possible to reduce the risk of leakages or electrical arcs of the electrical current circulating in the anvil. The device for soldering an electrical conductor with a connection device according to the present invention can be further improved by virtue of the following embodiments.

According to another embodiment not covered by the claimed invention but useful for its understanding, the anvil and the cutting unit may be in contact at the base of the anvil and are spaced apart at the top of the anvil by at least one recess in the anvil and/or in the cutting unit. Thus, the electrical insulation at the top of the anvil with the cutting unit is produced by means of a recess in the anvil and/or in the cutting unit. It is the volume of air filling the recess between the cutting unit and the anvil which makes it possible to ensure electrical insulation.

According to another embodiment not covered by the claimed invention but useful for its understanding, the at least one recess may be covered or filled with an insulating material. The electrical insulation may thus be carried out by the volume of air filling the recess or/and by an insulating material covering or filling the recess. In particular, the filling of the recess by an insulating material makes it possible to further improve the electrical insulation between the top of the anvil and the cutting unit.

According to an embodiment not covered by the claimed invention but useful for its understanding the object of the present invention can also be achieved by a device for soldering an electrical conductor with a connection device, comprising an anvil with an electrical contact area on which the electrical conductor and the connection device are intended to be placed, and a deformation unit provided with an area of contact with the connection device and the electrical conductor, where the connection device is plastically deformed around the electrical conductor; the electrical contact area of the anvil facing the contact area of the deformation unit such that an electrical current can circulate between the anvil and the deformation unit; such that beyond the respective contact areas of the anvil and of the deformation unit, the anvil and/or the deformation unit are at least partially covered with an electrically insulating coating by physical vapour deposition, in particular by a ceramic layer of 12 micrometers thickness. This insulating coating makes it possible to avoid electrical leaks of the electrical current passing through the deformation unit and/or the anvil. The electrical current is therefore prevented from exiting out of the device for soldering, and thus confers better control of the area passed through by the electrical current, in particular the contact area on which the soldering is carried out.

According to an embodiment not covered by the claimed invention but useful for its understanding the object of the present invention may also be achieved with a device for soldering an electrical conductor with a connection device, comprising a base plate on which an anvil is mounted, the anvil making it possible to pass an electrical current through the electrical conductor and/or the connection device, such that the anvil is at least partially housed in a through-hole of the base plate and arranged to be electrically insulated from the base plate; and such that the anvil has an electrical contact area towards the top of the anvil on which the electrical conductor and the connection device are intended to be placed, and a cutting unit capable of cutting a portion of the connection device towards the top of the anvil; such that the anvil and the cutting unit are at least partially distanced from each other at least at the top of the anvil in order to electrically insulate them from each other.

The device for soldering an electrical conductor with a connection device according to the present invention can be further improved by virtue of all of the above-described variants.

The embodiments can be combined in order to form more advantageous embodiment variants of the present invention.

The invention and its advantages shall be explained in greater detail hereinafter using preferred embodiments and in particular on the basis of the following accompanying figures, in which:
Figure 1a schematically depicts an exploded view of a device for soldering an electrical conductor with a connection device according to a first embodiment of the invention;
Figure 1b schematically depicts a sectional view of the assembled device according to the first embodiment of the invention;
Figure 2a depicts a schematic view of the first portion of the anvil according to the first embodiment;
Figure 2b depicts a transverse sectional view of the first portion of the anvil according to the first embodiment;
Figure 3a depicts a first surface of the base plate and the first portion of the anvil according to the first embodiment;
Figure 3b depicts a second surface of the base plate and the first portion of the anvil according to the first embodiment;
Figure 4 depicts a sectional view of the top of an anvil of a device for soldering according to a second embodiment;
Figure 5 depicts a sectional view of a device for soldering according to a third embodiment;
Figure 6 depicts a view of a deformation unit of a device for soldering which is not covered by the claimed invention but useful for its understanding;
Figure 7 depicts a view of a contact area of the deformation unit.

The invention will now be described in greater detail using advantageous embodiments in an exemplary manner and with reference to the drawings. The embodiments described are simply possible configurations and it should be borne in mind that the individual characteristics as described above may be provided independently of each other or may be omitted altogether when implementing the present invention.

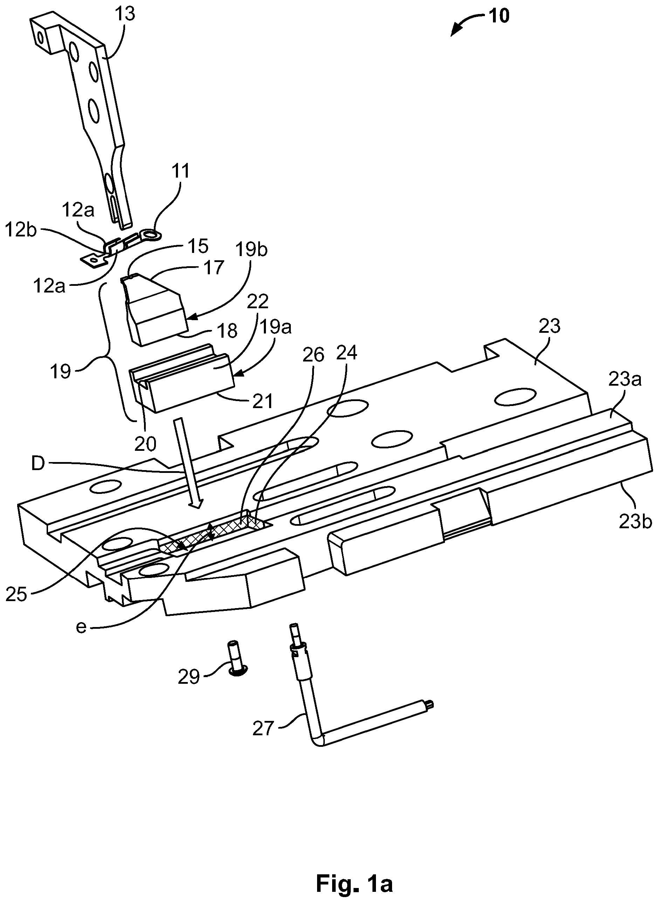

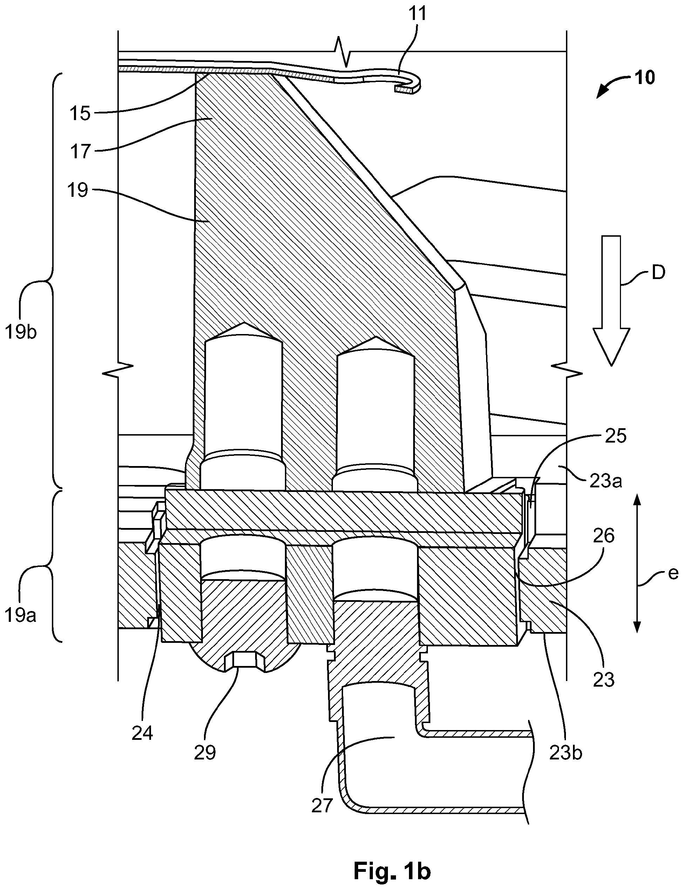

Figures 1a and 1b depict a device 10 for soldering an electrical conductor (not shown) with a connection device 11 according to a first embodiment of the invention. In particular, Figure 1a schematically depicts an exploded view of a device 10 and Figure 1b schematically depicts a sectional view of the assembled device 10. Figures 1a and 1b shall be described jointly below.

The connection device 11 comprises wings 12a which extend on either side of a crimping shaft 12b, as illustrated in Figure 1a. The electrical conductor is intended to be received in the crimping shaft 12b of the connection device 11. The wings 12a of the connection device 11 will be deformed by means of a movable deformation unit 13 of the device for soldering 10, so as to surround the electrical conductor housed in the crimping shaft 12b. Moreover, the wings 12a of the connection device 11 will be soldered together in order to ensure the electrical contact between the electrical conductor and the connection device 11. The soldering is carried out at a contact area 15 envisaged at the top 17 of an anvil 19. To this end, the anvil 19 is conductive in order to make an electrical current circulate through the electrical conductor and the connection device 11 during use of the device for soldering 10.

The anvil 19 is made of a steel capable of withstanding a high temperature, in particular of steel which has been subjected to a heat treatment, such that a temperature in the order of 280°C (degrees Celsius) can be obtained in the electrical connector to be soldered onto the connection device 11. In particular, the anvil 19 may be made of a steel of the W360 SPF 57 HRC type, which is capable of withstanding temperatures of around 600°C.

According to the invention, the anvil 19 comprises a first portion 19a and a second portion 19b, the first portion 19a comprising the base 21 of the anvil 19 and the second portion comprising the top 17 of the anvil 19. Here, according to this embodiment, the first portion 19a has a prism shape comprising two bases 20, 21 and lateral walls 22.

According to the first embodiment of the invention, the first portion 19a and the second portion 19b are two distinct portions suitable for being joined onto each other by a fixing means, which will be further described below. Thus, one of the two portions 19a, 19b of the anvil 19 may be replaced, in the event of deterioration for example, without having to change the anvil 19 in its entirety. When the anvil 19 is assembled, the base 20 of the first portion 19a is in contact with a base 18 of the first portion 19a.

In another embodiment, the anvil 19 is formed integrally so as to constitute a single piece in which the first portion and the second portion are therefore not two pieces which are distinct from each other.

The base 21 of the first portion 19a of the anvil 19 is fixed onto a base plate 23. The base plate 23 is made of steel, in particular of steel which has undergone a heat treatment. The base plate 23 comprises a first surface 23a and a second surface 23b opposite the first surface 23a. According to the invention, the base plate 23 comprises a through-hole 25 in the thickness of the plate 23 so as to open out on either side of the surfaces 23a, 23b of the base plate 23. At the through-hole 25, the base plate 23 has a thickness e between the first surface 23a and the second surface 23b. The through-hole 25 thus has a thickness, i.e. a depth, e of at least 5 millimeters. In an advantageous variant, the thickness e of the through-hole is 7 millimeters.

The through-hole 25 has a shape which is complementary to that of the first portion 19a of the anvil 19. Thus, the first portion 19a of the anvil 19 is configured to be housed in the through-hole 25 of the base plate in a direction of insertion D corresponding to the insertion of the base 21 of the anvil 19 into the plate 23 by the first surface 23a.

In order to retain the first portion 19a of the anvil 19 in the through-hole 25, the walls 26 of the through-hole 25 are covered with electrically insulating glue 24 (depicted in Figure 1a by the crosshatched pattern), in particular with thixotropic epoxy glue. As a consequence, the first portion 19a of the anvil 19 is housed and glued to the walls 26 of the through-hole 25 of the base plate 23.

So as to further electrically insulate the base plate 23, the first portion 19a of the anvil 19 has the lateral walls 22 covered with an insulating coating, for example a ceramic coating of 250 micrometers thickness by plasma projection deposition. The bases 20 and 21 of the first portion 19a, for their part, are not covered with an insulating coating in order to allow an electrical current to pass through the bases 20 and 21 of the first portion 19a.

With the exception of the contact area 15 and the base 18 of the second portion 19b in contact with the base 20 of the first portion 19a, the second portion 19b is covered with a coating by physical vapour deposition (PVD) of 12 micrometers which is capable of withstanding at least 1000°C in order to guarantee a continuous hold of 600°C corresponding to the temperature at the contact area 15 during use of the device for soldering 10. The first portion 19a, for its part, is subjected, during use of the device for soldering 10, to a temperature not usually exceeding 80°C, because the first portion 19a is not located at the contact area 15. Advantageously, the first portion 19a and the insulating glue 24 are nevertheless capable of withstanding a temperature of up to 230°C.

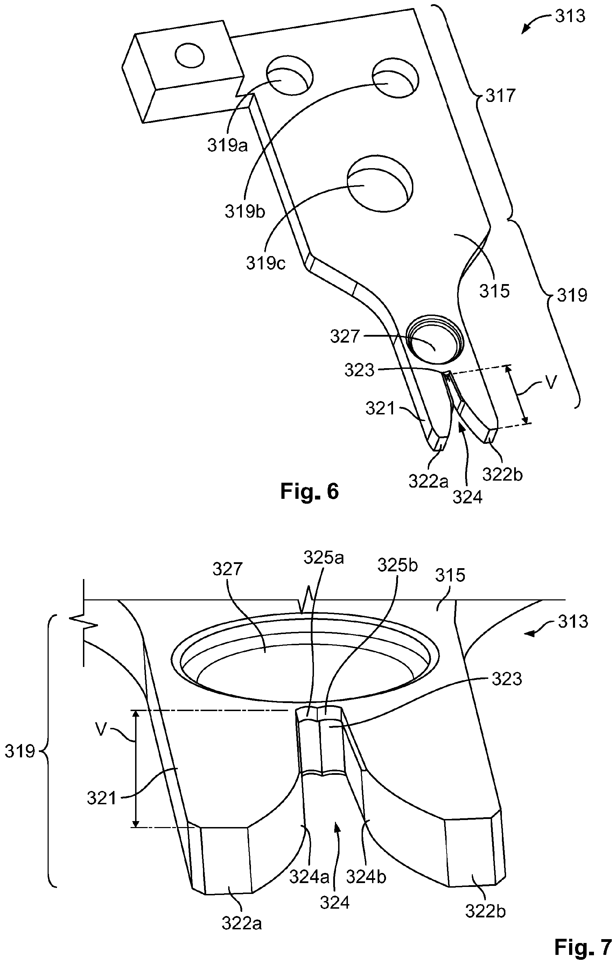

The deformation unit 13 may also be partially electrically insulated by a coating by physical vapour deposition identical to that deposited on the second portion 19b, leaving only the area of the deformation unit 13 which is configured to deform the wings 12a of the connection device 11, which is electrically conductive. The deformation unit 13 shall be described further with reference to Figures 6 and 7.

According to the invention, the lateral walls 22 of the anvil 19 are thus electrically insulated from the lateral walls 26 of the through-hole 25, which they face by a layer of insulating glue 24 and by their insulating coating. Thus, the risk of a leakage of electrical current between the electrical current circulating in the anvil 19 and the plate 23 may be avoided, even if areas of the insulating coating of the lateral walls 26 of the anvil 19 are damaged, following deterioration for example or by abrasion, by virtue of the layer of insulating glue 24.

The anvil 19 is connected electrically to a current generator (not shown) by means of an electrical supply cable 27 and screwed into the first portion 19a and into the second portion 19b of the anvil 19. Thus, the electrical supply cable 27 also makes it possible to fix the assembly of the first portion 19a and of the second portion 19b in the first embodiment of the invention. Moreover, a fixing screw 29 likewise makes it possible to retain the assembly of the anvil 19 by passing through the first portion 19a and the second portion 19b.

In order to carry out the mounting depicted in Figure 1b, wherein the device 10 is assembled, the walls 26 of the through-hole 25 are covered with electrically insulating glue 24. The first portion 19a is then inserted in the direction of insertion D into the through-hole 25, which will potentially cause an excess of glue to overflow on either side of the through-hole 25 at the first surface 23a and at the second surface 23b of the plate 23. This surplus of glue then fills the gluing grooves 39a-39d on one side 23a and the other side 23b of the base plate 23. The surplus of glue is envisaged in a sufficient quantity to guarantee the filling of the gluing grooves 39a-39d of the through-hole 25 with shoulders 39a-39d. The base plate 23 is then placed in the heat chamber, in particular at 120 degrees Celsius for 30 minutes, in order to harden the glue. Once the glue 24 has hardened, the potential excess of glue 24 which overflows onto the surfaces 23a, 23b of the plate is removed by sanding. In one variant, the excess of glue could be removed by another technical means. The second portion 19b of the anvil is then joined to the first portion 19a by means of the fixing screw 19 and the electrical supply cable 27, which are introduced via the second surface 23b of the surface 23 and which penetrate as far as into the second portion 19b by passing through the plate 23 and the first portion 19a.

According to one variant, the first portion 19a could be joined to the second portion 19b by joining means other than fixing screws, for example by a bayonet system or a cam system for fast clamping.

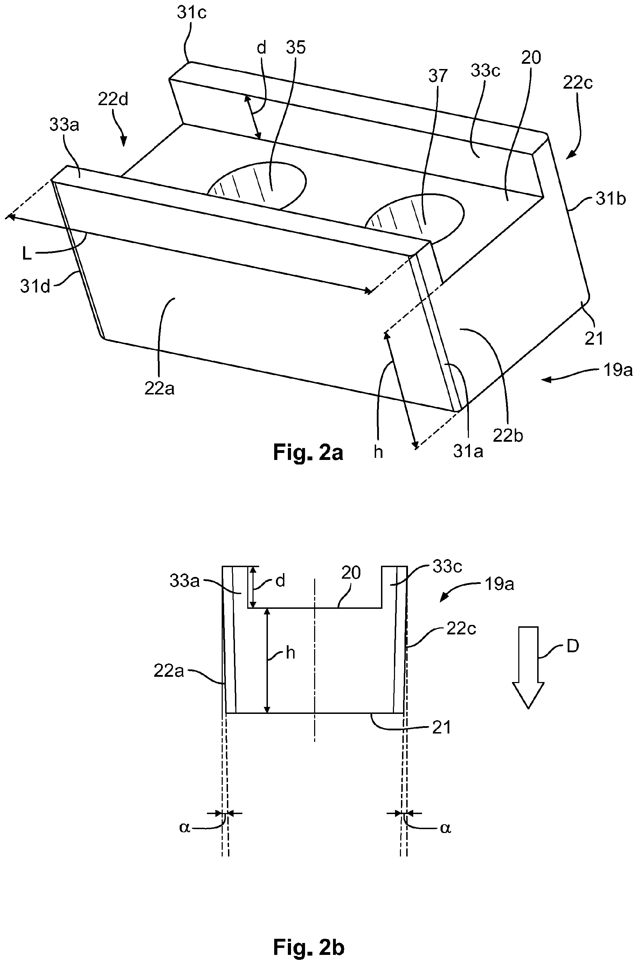

Figures 2a and 2b depict the first portion 19a of the anvil 19 according to the first embodiment. The first portion 19a shall be described jointly in relation to the schematic view of Figure 2a and the cross-sectional view of Figure 2b.

The elements with the same numerical references already used for the description of Figure 1a and Figure 1b will not be described again in detail, and reference is made to the descriptions thereof hereinabove.

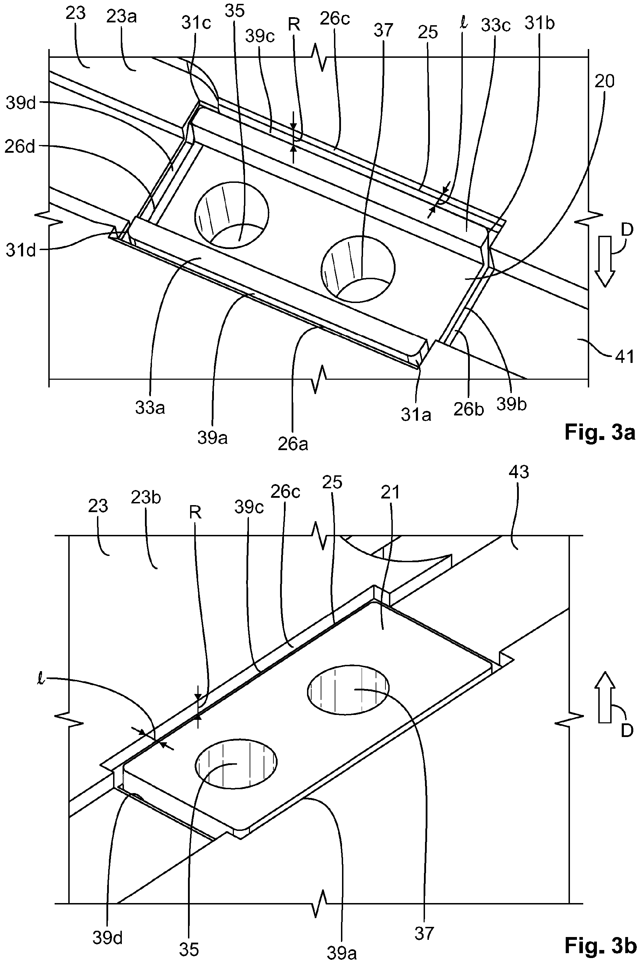

The first portion 19a of the anvil 19 has a prism shape, the bases 20, 21 of which are rectangular. The base 20 of the first portion 19a corresponds to the surface intended to be in contact with the second portion 19b when the anvil 19 is assembled. The base 21 corresponds to the base of the anvil 19. Since the bases 20, 21 are rectangular, the first portion 19a comprises four lateral walls 22a, 22b, 22c, 22d. The edges 31a, 31b, 31c, 31d at the junction of each lateral wall 22a-d are rounded or chamfered, in particular with a radius of curvature of 0.5 millimeters. Thus, in addition to avoiding sharp edges which could prove to be cutting, the chamfer of the lateral edges 31a-d of the first portion 19a makes it possible to provide more space for the insulating glue to fill between the first portion 19a and the lateral walls 26 of the through-hole. As a consequence, the increase in thickness of the layer of insulating glue between the first portion 19a and the through-hole 25 of the plate 23 makes it possible to further improve the electrical insulation of the anvil 19 with the base plate 23. This aspect is depicted further by Figure 3a, which is described below.

The shape of the first portion 19a of the anvil 19 is not limited to a prism shape. As a consequence, the shape of the through-hole 25 in the base plate 23, which has a shape which is complementary to that of the first portion of the anvil 19a, is not limited to a prism shape. The person skilled in the art may adapt the geometry of the first portion 19a and of the through-hole 25 to shapes other than the prism shape, for example to a cylindrical shape.

Lateral faces 22a, 22c, of greater length L, of the first portion 19a extend in the direction of their height h by a distance d beyond the base 20. The base 20 is thus lined by two walls 33a, 33c. These walls 33a, 33c make it possible, amongst other things, to ensure the positioning of the second portion 19b during the assembly of the anvil 19. The walls 33a, 33c are also adapted to the dimensions of a groove in the base plate 23 which will be described further with regard to Figure 3a.

The cross-sectional view depicted by Figure 2b depicts the lateral walls 22a and 22c beveled or tapered so as to be inclined by an angle α, in particular α = 1.3°. Thus, the lateral walls 22a and 22c are convergent in the direction of the height h in the direction of the base 20 towards the base 21. Likewise, the walls 26 of the through-hole 25 are inclined in the direction of insertion D, in particular by an angle α = 1.3°. The incline of the lateral walls 22a and 22c of the first portion 19a and of the walls 26 of the through-hole 25 therefore make it possible to bring about a form-fit between the anvil 19 and the through-hole 25 of the plate 23, such as a Morse cone type connection. This form-fit makes it possible to avoid the anvil 19 passing through the through-hole 25 during insertion in the direction D, in particular when the glue deposited on the walls 26 of the through-hole 25 is still in the liquid or paste state, and above all during use of the device for soldering 10 under the stress of soldering and/or crimping during the crimping. Moreover, the Morse cone type connection permitted by the incline of the walls 22a, 22c, 26 makes it possible to guarantee self-centering of the part 19a in the through-hole 25 of the base plate 23 during the insertion of the part 19a in the direction D.

In a variant, the first part 19a of the anvil 19 could have another shape, as long as the shape of the first part of the anvil 19a allows a form-fit with the through-hole 25 to avoid the anvil 19 passing through the through-hole 25 in the direction of insertion D.

The first portion 19a is also provided with two holes 35, 37 in the direction of insertion D, in which the electrical supply cable 27 and the fixing screw 29 are housed in order to make it possible to fix the first part 19a to the second part 19b of the anvil 19.

Figures 3a and 3b respectively depict the first surface 23a and the second surface 23b of the base plate 23 on which the first portion 19a of the anvil 19 according to the first embodiment is mounted. The elements with the same numerical references already used for the description of Figures 1a, 1b, 2a and 2b will not be described again in detail, and reference is made to the descriptions thereof hereinabove.

According to the first embodiment, the first portion 19a is introduced in the direction of insertion D into the through-hole 25 of the base plate 13 and is glued, by an electrically insulating glue, to the plate 23, then the second portion 19b is joined to the first portion 19a. Figures 3a and 3b depict the step in which the first portion 19a is housed in the through-hole 25 but in which the second portion 19b has not yet been joined to the first portion 19a.

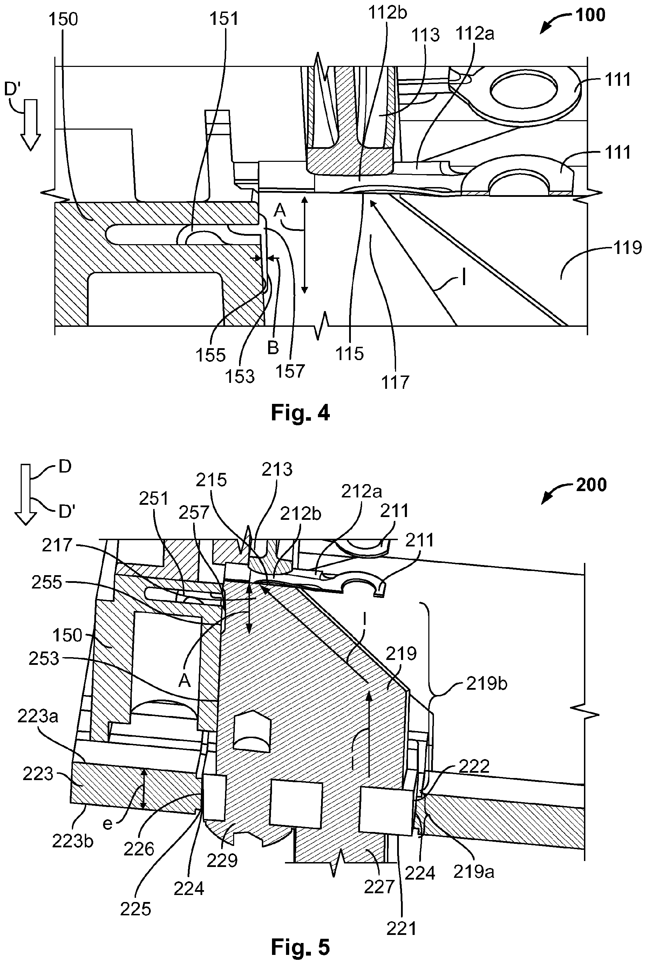

In one variant, the first portion 19a could be joined to the second portion 19b in order to form the anvil 19, then the anvil 19 could be fixed in the through-hole 25 of the base plate 23. This variant will be described further with regard to the second embodiment depicted by Figure 4 in relation to an integrally formed anvil.

The through-hole 25 of the base plate 23 is a hole with shoulders, such that the lateral walls 26a, 26b, 26c, 26d of the hole 25 comprise shoulders 39a, 39b, 39c, 39d at the first surface 23a and at the second surface 23b of the plate 23. These shoulders 39a-d form, with the walls 22a-22d of the first portion 19a of the anvil 19, gluing grooves 39a-39d in which the electrically insulating glue (not shown) is arranged. These gluing grooves 39a-39d, which are in particular at least 0.3 millimeters in width I, make it possible to uniformly increase the thickness of the layer of insulating glue, which contributes to reducing the risk of loss of electrical current from the anvil to the base plate.

According to the first embodiment, the height h of the first portion 19a is smaller than the depth of the through-hole 25. Thus, the first portion 19a of the anvil 19 may be positioned in the hole 25 without the first portion 19a protruding from the through-hole 25 either at the first surface 23a or at the second surface 23b of the plate 23. This positioning, with an indent from the first portion 19a, of height R parallel to the direction of insertion D, of each surface 23a, 23b of the plate 23 makes it possible to minimise a risk of leakage of current or of electrical arc from the first portion 19a to the plate 23. In particular, the height R of the indent between each base 20, 21 of the first portion 19a and each surface 23a, 23b of the plate 23 is equivalent to at least 0.3 millimeters.

The base plate 23 comprises on each surface 23a, 23b a groove 41, 43 which extends on either side of the through-hole 25 along the length of the through-hole 25. These grooves 41, 43 make it possible, in particular, to assist in the mounting and disassembly of the anvil 19. The groove 23 in particular makes it possible to be able to adjust, if necessary, the height h of the base 20 of the first portion 19a after it is glued onto the plate 23. As depicted in Figure 3a, the walls 33a, 33c at the base 20 of the first portion 19a are longitudinally aligned with the groove 41 of the first surface 23a of the plate 23.

The present invention according to the first embodiment thus makes it possible to reduce the risk of electrical leakage or electrical arc between the electrical current circulating in the anvil 19 and the base plate 23 by virtue of the electrical insulation provided by the insulating glue 24 and the insulating coating of the anvil 19. The improvement in the electrical insulation of the anvil 19 thus makes it possible to concentrate more diffused heat by Joule effect at the contact area 15 of the top 17 of the anvil 19 where the soldering is carried out.

Figure 4 depicts a sectional view of a device 100 for soldering an electrical conductor with a connection device 111 according to a second embodiment.

Figure 4 partially depicts an anvil 119 face-to-face with a cutting unit, in this case a cutting carrier strip 150, which is not covered by the claimed invention but useful for its understanding. The cutting carrier strip 150 makes it possible to cut a portion 151 of an electrical conductor intended to be soldered to a connection device 111.

The connection device 111 comprises wings 112a which extend on either side of a crimping shaft 112b. The electrical conductor is intended to be received in the crimping shaft 112b of the connection device 111. The wings 112a of the connection device 111 will be deformed by means of a movable deformation unit 113 of the device for soldering 100, so as to surround the electrical conductor housed in the crimping shaft 112b. Moreover, the wings 112a of the connection device 111 will be soldered together in order to ensure the electrical contact between the electrical conductor and the connection device 111. The soldering is carried out at a contact area 115 provided at the top 117 of an anvil 119. To this end, the anvil 119 is conductive in order to make an electrical current (I) circulate through the electrical conductor and the connection device 111 during use of the device for soldering 110.

The anvil 119 is made of a steel capable of withstanding a high temperature, in particular of steel which has been subjected to a heat treatment, such that a temperature in the order of 280°C (degrees Celsius) can be obtained in the electrical connector to be soldered onto the connection device 111. In particular, the anvil 119 may be made of a steel of the W360 SPF 57 HRC type, which is capable of withstanding temperatures of around 600°C. The anvil 119 is covered with an insulating coating, a ceramic coating of 12 micrometers thickness deposited by plasma projection, for example, except at the contact area 115 to allow soldering.

A wall 153 of the anvil 119 is face-to-face with a wall 155 of the cutting carrier strip 150. In practice, it turns out that, at the wall 153, the insulating coating of the anvil 119 is likely to deteriorate following repeated use of the device 100 for example, causing a risk of electrical leakage or electrical arc from the areas of deterioration of the insulating coating of the anvil 119, in particular to the cut portion 151 of the electrical conductor. This risk is moreover increased on the wall 153 at the top 117 of the anvil 119, in particular over a distance A of 2.5 millimeters, which extends in the anvil 119 from the contact area 115 in the direction of displacement D' of the cutting unit 150. Indeed, this distance A corresponds to the length over which the cutting carrier strip 150 slides in the direction D' with the cut portion 151 of the electrical conductor. Any cutting edges of the cut portion 151 are then likely to damage the insulation of the anvil 119, particularly along the distance A of the wall 153 of the anvil 119.

Thus, in order to reduce the risk of electrical leakage from the wall 153 at the top 117 of the anvil 119, the anvil 119 of the device 100 according to the second embodiment is partially distanced from the cutting carrier strip 150, in order to electrically insulate them from each other. According to the second embodiment, the anvil 119 is distanced from the cutting carrier strip 150 by a recess 157 in the wall 153 of the anvil 119 produced along the distance A and depth B such that B ≥ 0.3 millimeters. As a consequence, the anvil 119 and the cutting carrier strip 150 are face-to-face such that their respective walls 153, 155 are at least spaced apart at the top 117 of the anvil 119 by the recess 157 in the anvil 119. Thus, the recess 157 is advantageously produced along the distance A over which the cutting carrier strip 150 slides the part of the cut electrical conductor 151, which makes it possible to improve the durability of the insulating coating of the anvil 119 by reducing the mechanical stress at that location.

Moreover, the volume of air filling the recess 157 makes it possible to ensure the electrical insulation between the anvil 119 and the cutting carrier strip 150. The electrical insulation may thus be produced by the volume of air filling the recess of the anvil but also, in one variant, by an insulating material covering or filling the recess. In particular, the filling of the recess 157 by an insulating material makes it possible to further improve the electrical insulation between the top 117 of the anvil 119 and the cutting carrier strip 150.

In one variant, the recess 157 may be any shape. Furthermore, there may also be several recesses of equal and/or different size and shape. In another variant, the wall 155 of the cutting carrier strip 150 could comprise one or more recesses in order to create an air space or a space filled with insulation, in particular instead of the recess 157. In one variant, the respective walls 153, 155 of the anvil 119 and of the cutting carrier strip 150 are each equipped with at least one recess each.

Thus, the example according to the second embodiment makes it possible to prevent abrasion between the top 117 of the anvil 119 and the cutting unit 150, which is not covered by the claimed invention, and the cut portion 151 of the connection device 111 at the potentially cutting edges. The risk of deterioration, by friction, of the coating of the anvil 119 at its top 117 is thus reduced. The reduction in the risk of deterioration of the anvil 119 makes it possible to consecutively reduce the risk of leakages or electrical arcs of the electrical current (I) circulating in the anvil 119. The improvement in the electrical insulation of the anvil 119 therefore makes it possible to concentrate more diffused heat by Joule effect at the contact area 115 of the top 117 of the anvil 119 where the soldering is carried out.

Figure 5 depicts a sectional view of a device 200 for soldering an electrical conductor with a connection device 211 according to a third embodiment.

The device 200 according to the third embodiment corresponds to the combination of the first embodiment with the second embodiment.

The device 200 is used to solder an electrical conductor with a connection device 211. The connection device 211 comprises wings 212a which extend on either side of a crimping shaft 212b. The electrical conductor is intended to be received in the crimping shaft 212b of the connection device 211. The wings 212a of the connection device 211 will be deformed by means of a movable deformation unit 213, which is not covered by the claimed invention but useful for its understanding, of the device for soldering 200 so as to surround the electrical conductor housed in the crimping shaft 212b. Moreover, the wings 212a of the connection device 211 will be soldered together in order to ensure the electrical contact between the electrical conductor and the connection device 211. The soldering is carried out at a contact area 215 envisaged at the top 217 of an anvil 219. To this end, the anvil 219 is conductive in order to make an electrical current (I) circulate through the electrical conductor and the connection device 211 during use of the device for soldering 200.

The anvil 219 is covered with an insulating coating, a ceramic coating of 12 micrometers thickness deposited by physical vapour deposition, for example, except at the base 221 of the anvil 219 and at the contact area 215 to allow the electrical current to circulate towards the soldering area.

In the third embodiment of the present invention, the device 200 comprises the anvil 219 which, in contrast to the first embodiment, is integrally formed as a single piece. According to one variant, the anvil 219 could be constructed from at least two distinct pieces which are joined together.

The anvil 219 comprises a first portion 219a and a second portion 219b, the first portion 219a comprising the base 221 of the anvil 219 and the second portion 229b comprising the top 217 of the anvil 219.

The base 221 of the first portion 219a of the anvil 219 is fixed onto a base plate 223. The base plate 223 comprises a first surface 223a and a second surface 223b opposite the first surface 223a. According to the invention, the base plate 223 comprises a through-hole 225 in the thickness of the plate 223 so as to open out on either side of the surfaces 223a, 223b of the base plate 223. At the through-hole 225, the base plate 223 has a thickness e between the first surface 223a and the second surface 223b. The through-hole 225 thus has a thickness, i.e. a depth, e of at least 5 millimeters. In an advantageous variant, the thickness e of the through-hole is 7 millimeters.

The through-hole 225 has a shape which is complementary to that of the first portion 219a of the anvil 219. Thus, the first portion 219a of the anvil 219 is housed in the through-hole 225 of the base plate in a direction of insertion D corresponding to the insertion of the base 221 of the anvil 219 into the plate 223 by the first surface 223a.

In order to retain the first portion 219a of the anvil 219 in the through-hole 225, the walls 226 of the through-hole 225 are covered with electrically insulating glue 224, in particular with thixotropic epoxy glue. As a consequence, the first portion 219a of the anvil 219 is housed and glued to the walls 226 of the through-hole 225 of the base plate 223.

The anvil 219 is connected electrically to a current generator (not shown) by means of an electrical supply cable 227 and screwed into the first portion 219a and into the second portion 219b of the anvil 219. Moreover, a fixing screw 229 likewise makes it possible to retain the assembly of the anvil 19 on the plate 223.

According to the invention, the anvil 219 is therefore electrically insulated from the lateral walls 226 of the through-hole 225 via a layer of insulating glue 224 and via their insulating coating. Thus, the risk of a leakage of electrical current between the electrical current circulating in the anvil 219 towards the plate 223 may be avoided, even if areas of the insulating coating of the lateral walls 226 of the anvil 219 are damaged, following deterioration for example, by virtue of the layer of insulating glue 224.

As in the first embodiment, the first portion 229a has lateral walls 222 inclined relative to the walls 226 of the through-hole 225, such that there is a form-fit between the anvil 219 and the base plate 223 during insertion of the anvil 219 into the through-hole 225 in the direction of insertion D. This form-fit makes it possible to avoid the anvil 219 passing through the through-hole 225 during insertion in the direction D, in particular when the glue deposited on the walls 226 of the through-hole 225 is still in the liquid or paste state.

Moreover, as in the second embodiment, the anvil 229 is face-to-face with a cutting unit, in this case a cutting carrier strip 250, which is not covered by the claimed invention but useful for its understanding. The cutting carrier strip 250 makes it possible to cut a portion 251 of an electrical conductor intended to be soldered to a connection device 211.

As depicted in Figure 5, a wall 253 of the anvil 219 is face-to-face with a wall 255 of the cutting carrier strip 250. In practice, it turns out that, at the wall 253, the insulating coating of the anvil 219 is likely to deteriorate following repeated use of the device 200 for example, causing a risk of electrical leakage or electrical arc, from the areas of deterioration of the insulating coating of the anvil 219, in particular towards the cut portion 251 of the electrical conductor. This risk is moreover increased on the wall 253 at the top 217 of the anvil 219, in particular over a distance A of 2.5 millimeters, which extends in the anvil 219 from the contact area 215 in the direction of displacement D' of the cutting unit 250. Indeed, this distance A corresponds to the length over which the cutting carrier strip 250 slides in the direction D' with the cut portion 251 of the electrical conductor. Any cutting edges of the cut portion 251 are then likely to damage the insulation of the anvil 219, particularly along the distance A of the wall 253 of the anvil 219.

Thus, in order to reduce the risk of electrical leakage from the wall 253 at the top 217 of the anvil 219, the anvil 219 of the device 200 is partially distanced from the cutting carrier strip 250, in order to electrically insulate them from each other. The anvil 219 is distanced from the cutting carrier strip 250 by a recess 257 in the wall 253 of the anvil 219 produced along the distance A and depth B such that B ≥ 0.3 millimeters. As a consequence, the anvil 219 and the cutting carrier strip 250 are face-to-face such that their respective walls 253, 255 are in contact from the surface 223a of the base plate 223 and are spaced apart at the top 217 of the anvil 219 by the recess 257 in the anvil 219. Thus, the recess 257 is advantageously produced along the distance A over which the cutting carrier strip 250 slides the part of the cut electrical conductor 251, which makes it possible to improve the durability of the insulating coating of the anvil 219 by reducing the mechanical stress at that location.

Moreover, the volume of air filling the recess 257 makes it possible to ensure the electrical insulation between the anvil 219 and the cutting carrier strip 250. The electrical insulation may thus be produced by the volume of air filling the recess of the anvil but also, in one variant, by an insulating material covering or filling the recess. In particular, the filling of the recess 257 by an insulating material makes it possible to further improve the electrical insulation between the top 217 of the anvil 219 and the cutting carrier strip 250.

In one variant, the recess 257 may be any shape. Furthermore, there may also be several recesses of equal and/or different size and shape. In another variant, the wall 255 of the cutting carrier strip 250 could comprise one or more recesses in order to create an air space or a space filled with insulation, in particular instead of the recess 257. In one variant, the respective walls 253, 255 of the anvil 219 and of the cutting carrier strip 150 are each equipped with at least one recess each.

Thus, the example according to the third embodiment makes it possible to combine an improvement in the insulation of the anvil 229 at the base plate 223 as well as at the top of the anvil 227. As a consequence, by reducing electrical leaks, the heat may be concentrated more on the contact area on which the electrical conductor and the connection device are intended to be soldered, which improves the operation and effectiveness of the device for soldering.

Figures 6 and 7 depict a deformation unit 313. The deformation unit 313 is configured for, amongst other things, the device 10, the device 100 and the device 200 which have been described previously.

The deformation unit 313 comprises a punch 315 which may be displaced so as to press on an electrical connector 101 and a connection device, such as those described in the preceding embodiments, in order to plastically deform the wings of the connection device around the electrical conductor when the tool 10, 100, 200 is used. The punch 315 is configured such that an electrical current is capable of passing through it. A first punch 315 part 317 is provided with several orifices 319a-c, which particularly make it possible to fix the deformation unit 313 onto another support (not shown in Figures 6 and 7). The punch 315 also comprises a second part 319, one end 321 of which is V-shaped with an opening 324 of depth V. The arms 322a, 322b of the V shape are joined at an area 323, called the contact area 323 of the deformation unit 313. This contact area 323 corresponds to the area configured to deform the wings of the connection device around the electrical conductor.

As depicted in Figure 7, the contact area 323 comprises two grooves 325a, 325b.

The second part 319 of the punch 315 also comprises a recess 327 depicted with a circular shape in Figures 6 and 7, but which could take any other shape. The recess 327 may have a thickness of 5 millimeters in particular. The use of such a recess 327 makes it possible to bring the hottest area closer to the contact area 323, which is intended to be positioned facing the electrical contact area of an anvil of one of the devices 10, 100, 200 described previously. According to the present invention, the punch 315 is covered with an electrically insulating ceramic coating by physical vapour deposition, in particular of 12 micrometers thickness, with the exception - at least - of the contact area 323 and of the inner walls 324a, 324b opposite the arms 322a, 322b of the second part 319. The insulating coating by physical vapour deposition thus makes it possible to better localise the passage of the electrical current in the deformation unit 313 and thus to improve the effectiveness of the device for soldering 10, 100, 200 by increasing the temperature and by localising the heat in the soldering area.

The embodiments described are simply possible configurations and it should be borne in mind that the individual characteristics of the embodiments may be combined with each other or provided independently of each without departing from the scope of the invention as defined in the appended claims.

### References

10: device according to the first embodiment
11: connection device
12a: wings of the connection device
12b: crimping shaft
13: deformation unit
15: contact area
17: anvil top
18: base of the second anvil portion
19: anvil
19a: first anvil portion
19b: second anvil portion
20, 21: bases
22, 22a-d: lateral walls
23: base plate
23a: first surface of the plate
23b: second surface of the plate
24: glue
25: through-hole
26, 26a-d: wall through-hole
27: electrical supply cable
29: fixing screw
31a-d: edges
33a, 33c: walls
35, 37: hole
39a-d: shoulder, grooves
41, 43: groove plate
100: device according to the second embodiment
111: connection device
112a: wings of the connection device
113: deformation unit
115: contact area
117: anvil top
119: anvil
150: cutting carrier strip
151: electrical conductor portion
153: anvil wall
155: cutting carrier strip wall
157: recess
200: device according to the third embodiment
211: connection device
212a: wings of the connection device
212b: crimping shaft
213: deformation unit
215: contact area
217: anvil top
219: anvil
219a: anvil first portion
219b: anvil second portion
221: base
222: anvil wall
223: base plate
223a, 223b: base plate surface
224: glue
225: through-hole
226: through-hole wall
227: supply cable
229: fixing screw
250: cutting carrier strip
251: electrical conductor portion
253: anvil wall
255: cutting carrier strip wall
257: recess
313: deformation unit
315: punch
317: first part
319a-c: orifices
319: second part
321: end
322a, b: arms
323: contact area
324: opening
324a, b: inner wall
325a, b: grooves
327: recess
A: distance
α : angle of incline
B: recess depth
D: direction of insertion
D': cutting unit translation
d: first portion distance
e: through-hole thickness
h: first portion height
I: electrical current
L: lateral face length
l: gluing groove width
R: height of the indent
V: depth

## Claims

1. A device for soldering an electrical conductor with a connection device, comprising a conductive base plate (23, 223) on which a conductive anvil (19, 219) is mounted, the anvil (19 219) making it possible to pass an electrical current (I) through the electrical conductor and the connection device (11, 211), such that the anvil (19, 219) is at least partially housed in a through-hole (25, 225) of the base plate (23, 223) and arranged to be electrically insulated from the base plate (23, 223),
wherein the anvil (19, 219), which is housed in the through-hole (25, 225) of the base plate (23, 223), is fixed to the base plate (23, 223) by an electrically insulating glue (24, 224).

2. The device for soldering an electrical conductor with a connection device according to claim 1, the anvil (19) of which is constructed with at least two distinct portions (19a, 19b),
such that a first portion (19a) of the anvil (19) is housed in the through-hole (25) of the base plate (23), and
that a second portion (19b) comprises an electrical contact area (15) towards a top (17) of the anvil (19) on which the electrical conductor and the connection device (11) are intended to be placed.

3. The device for soldering an electrical conductor with a connection device according to claim 1, the anvil (219) of which comprises at least two portions (219a, 219b) formed integrally with the anvil (219) such that the anvil is formed as a single piece, and such that a first portion (219a) of the anvil (219) is housed in the through-hole (225) of the base plate (223), and
a second portion (219b) comprises an electrical contact area (215) towards a top (217) of the anvil (219) on which the electrical conductor and the connection device (211) are intended to be placed.

4. The device for soldering an electrical conductor with a connection device according to claim 2 or 3, of which the first portion (19a, 219a) of the anvil (19, 219) has a shape which is complementary to the through-hole (25, 225),
such that the first portion (19a, 219a) of the anvil (19, 219) is retained in the through-hole (25, 225) by form-fit in a direction of insertion (D) of the first portion (19a, 219a) of the anvil (19, 219) into the through-hole (25, 225), in particular the first portion (19a, 219a) and/or
the through-hole (25, 225) has a beveled or tapered shape, for example of the Morse cone type.

5. The device for soldering an electrical conductor with a connection device according to any one of claims 2 to 4, the anvil (19, 219) of which is made of steel and of which at least the entirety of the lateral face or faces (22, 222) of the first portion (19a, 219a) of the anvil (19, 219) housed in the through-hole (25, 225) is covered with an insulating coating, in particular made of ceramic.

6. The device for soldering an electrical conductor with a connection device according to any one of claims 2 to 5, the through-hole (25, 225) of which opens out on one side (23a, 223a) and the other side (23b, 223b) of the base plate (23, 223) and is a hole with shoulders (39) at least on one side (23a, 23b, 223a, 223b) of the base plate (23, 223), such that the shoulders (39) of the through-hole (25, 225) form, with the first portion of the anvil (19), gluing grooves (29) at least partially filled with the insulating glue (24, 224).

7. The device for soldering an electrical conductor with a connection device according to claims 2 to 6, a depth of the through-hole (25, 225) of which is greater than a height (h) of the first portion (19a, 219a) of the anvil (19, 219), such that the first portion (19a, 219a) of the anvil (19, 219) is positioned with an indent (R) from each surface (23a-b, 223a-b) of the base plate (23, 223).

8. The device for soldering an electrical conductor with a connection device according to claim 2, of which the first portion (19a) and the second portion (19b) of the anvil (19) are joined to each other by a joining means, in particular by at least one fixing screw (29, 229).

## Patentansprüche

1. Vorrichtung zum Verlöten eines elektrischen Leiters mit einer Verbindungsvorrichtung, die eine leitende Grundplatte (23, 223) umfasst, auf der ein leitender Amboss (19, 219) angebracht ist, wobei es der Amboss (19, 219) ermöglicht, einen elektrischen Strom (I) durch den elektrischen Leiter und die Verbindungsvorrichtung (11, 211) zu leiten, so dass der Amboss (19, 219) wenigstens teilweise in einem Durchgangsloch (25, 225) der Grundplatte (23, 223) untergebracht ist und so angeordnet ist, dass er von der Grundplatte (23, 223) elektrisch isoliert ist,
wobei der Amboss (19, 219), der in dem Durchgangsloch (25, 225) der Grundplatte (23, 223) untergebracht ist, durch einen elektrisch isolierenden Klebstoff (24, 224) an der Grundplatte (23, 223) befestigt ist.

2. Vorrichtung zum Verlöten eines elektrischen Leiters mit einer Verbindungsvorrichtung nach Anspruch 1, deren Amboss (19) aus wenigstens zwei getrennten Abschnitten (19a, 19b) aufgebaut ist,
so dass ein erster Abschnitt (19a) des Ambosses (19) in dem Durchgangsloch (25) der Grundplatte (23) untergebracht ist, und
dass ein zweiter Abschnitt (19b) eine elektrische Kontaktfläche (15) zu einer Oberseite (17) des Ambosses (19) hin umfasst, auf der der elektrische Leiter und die Verbindungsvorrichtung (11) platziert werden sollen.

3. Vorrichtung zum Verlöten eines elektrischen Leiters mit einer Verbindungsvorrichtung nach Anspruch 1, deren Amboss (219) wenigstens zwei einstückig mit dem Amboss (219) ausgebildete Abschnitte (219a, 219b) umfasst, so dass der Amboss einstückig ausgebildet ist, und
so dass ein erster Abschnitt (219a) des Ambosses (219) in dem Durchgangsloch (225) der Grundplatte (223) untergebracht ist, und
ein zweiter Abschnitt (219b) eine elektrische Kontaktfläche (215) zu einer Oberseite (217) des Ambosses (219) hin umfasst, auf der der elektrische Leiter und die Verbindungsvorrichtung (211) platziert werden sollen.

4. Vorrichtung zum Verlöten eines elektrischen Leiters mit einer Verbindungsvorrichtung nach Anspruch 2 oder 3, bei der der erste Abschnitt (19a, 219a) des Ambosses (19, 219) eine zu dem Durchgangsloch (25, 225) komplementäre Form aufweist,
so dass der erste Abschnitt (19a, 219a) des Ambosses (19, 219) in dem Durchgangsloch (25, 225) durch Formschluss in einer Einfügerichtung (D) des ersten Abschnitts (19a, 219a) des Ambosses (19, 219) in das Durchgangsloch (25, 225) gehalten wird,
wobei insbesondere der erste Abschnitt (19a, 219a) und/oder das Durchgangsloch (25, 225) eine abgeschrägte oder konische Form, zum Beispiel vom Typ Morsekegel hat.

5. Vorrichtung zum Verlöten eines elektrischen Leiters mit einer Verbindungsvorrichtung nach einem der Ansprüche 2 bis 4, deren Amboss (19, 219) aus Stahl besteht und bei der wenigstens die Gesamtheit der Seitenfläche(n) (22, 222) des in dem Durchgangsloch (25, 225) untergebrachten ersten Abschnitts (19a, 219a) des Ambosses (19, 219) mit einer isolierenden Beschichtung, insbesondere aus Keramik, versehen ist.

6. Vorrichtung zum Verlöten eines elektrischen Leiters mit einer Verbindungsvorrichtung nach einem der Ansprüche 2 bis 5, deren Durchgangsloch (25, 225) sich auf der einen Seite (23a, 223a) und der anderen Seite (23b, 223b) der Grundplatte (23, 223) öffnet und wenigstens auf einer Seite (23a, 23b, 223a, 223b) der Grundplatte (23, 223) ein Loch mit Schultern (39) ist, so dass die Schultern (39) des Durchgangslochs (25, 225) mit dem ersten Abschnitt des Ambosses (19) wenigstens teilweise mit dem Isolierkleber (24, 224) gefüllte Kleberillen (29) bilden.

7. Vorrichtung zum Verlöten eines elektrischen Leiters mit einer Verbindungsvorrichtung nach einem der Ansprüche 2 bis 6, bei der eine Tiefe des Durchgangslochs (25, 225) größer ist als eine Höhe (h) des ersten Abschnitts (19a, 219a) des Ambosses (19, 219), so dass der erste Abschnitt (19a, 219a) des Ambosses (19, 219) mit einem Einschnitt (R) von jeder Oberfläche (23a-b, 223a-b) der Grundplatte (23, 223) positioniert ist.

8. Vorrichtung zum Verlöten eines elektrischen Leiters mit einer Verbindungsvorrichtung nach Anspruch 2, bei der der erste Abschnitt (19a) und der zweite Abschnitt (19b) des Ambosses (19) durch eine Verbindungseinrichtung, insbesondere durch wenigstens eine Befestigungsschraube (29, 229), miteinander verbunden sind.

## Revendications

1. Dispositif de brasage d'un conducteur électrique avec un dispositif de connexion, comprenant une plaque de base conductrice (23, 223) sur laquelle une enclume conductrice (19, 219) est montée, l'enclume (19, 219) permettant de faire passer un courant électrique (I) à travers le conducteur électrique et le dispositif de connexion (11, 211), de sorte que l'enclume (19, 219) soit au moins partiellement accueillie dans un trou traversant (25, 225) de la plaque de base (23, 223) et disposée pour être isolée électriquement de la plaque de base (23, 223),
dans lequel l'enclume (19, 219), qui est accueillie dans le trou traversant (25, 225) de la plaque de base (23, 223), est fixée à la plaque de base (23, 223) par une colle électriquement isolante (24, 224).

2. Le dispositif de brasage d'un conducteur électrique avec un dispositif de connexion selon la revendication 1, dont l'enclume (19) est constituée d'au moins deux parties distinctes (19a, 19b),
de sorte qu'une première partie (19a) de l'enclume (19) soit accueillie dans le trou traversant (25) de la plaque de base (23), et
qu'une deuxième partie (19b) comprenne une zone de contact électrique (15) vers un dessus (17) de l'enclume (19) sur laquelle le conducteur électrique et le dispositif de connexion (11) sont destinés à être placés.

3. Le dispositif de brasage d'un conducteur électrique avec un dispositif de connexion selon la revendication 1, dont l'enclume (219) comprend au moins deux parties (219a, 219b) constituées intégralement avec l'enclume (219) de sorte que l'enclume soit constituée d'un seul tenant, et
de sorte qu'une première partie (219a) de l'enclume (219) soit accueillie dans le trou traversant (225) de la plaque de base (223), et
qu'une deuxième partie (219b) comprenne une zone de contact électrique (215) vers un dessus (217) de l'enclume (219) sur laquelle le conducteur électrique et le dispositif de connexion (211) sont destinés à être placés.

4. Le dispositif de brasage d'un conducteur électrique avec un dispositif de connexion selon la revendication 2 ou 3, dont la première partie (19a, 219a) de l'enclume (19, 219) présente une forme qui est complémentaire au trou traversant (25, 225),
de sorte que la première partie (19a, 219a) de l'enclume (19, 219) soit retenue dans le trou traversant (25, 225) par ajustement de forme dans une direction d'insertion (D) de la première partie (19a, 219a) de l'enclume (19, 219) dans le trou traversant (25, 225), en particulier la première partie (19a, 219a) et/ou
le trou traversant (25, 225) présente une forme biseautée ou effilée, par exemple du type de cône Morse.

5. Le dispositif de brasage d'un conducteur électrique avec un dispositif de connexion selon l'une quelconque des revendications 2 à 4, dont l'enclume (19, 219) est constitué d'acier et dont au moins l'intégralité de la ou des faces latérales (22, 222) de la première partie (19a, 219a) de l'enclume (19, 219) accueillie dans le trou traversant (25, 225) est couverte d'un revêtement isolant, en particulier fait de céramique.

6. Le dispositif de brasage d'un conducteur électrique avec un dispositif de connexion selon l'une quelconque des revendications 2 à 5, dont le trou traversant (25, 225) s'ouvre vers l'extérieur sur un côté (23a, 223a) et l'autre côté (23b, 223b) de la plaque de base (23, 223) et est un trou avec des épaulements (39) au moins sur un côté (23a, 23b, 223a, 223b) de la plaque de base (23, 223), de sorte que les épaulements (39) du trou traversant (25, 225) constituent, avec la première partie de l'enclume (19), des gorges de collage (29) au moins partiellement remplies avec la colle isolante (24, 224) .

7. Le dispositif de brasage d'un conducteur électrique avec un dispositif de connexion selon les revendications 2 à 6, dont une profondeur du trou traversant (25, 225) est supérieure à une hauteur (h) de la première partie (19a, 219a) de l'enclume (19, 219), de sorte que la première partie (19a, 219a) de l'enclume (19, 219) soit positionnée avec un retrait (R) depuis chaque surface (23a-b, 223a-b) de la plaque de base (23, 223).

8. Le dispositif de brasage d'un conducteur électrique avec un dispositif de connexion selon la revendication 2, dont la première partie (19a) et la deuxième partie (19b) de l'enclume (19) sont jointes l'une à l'autre par un moyen de jointure, en particulier par au moins une vis de fixation (29, 229).
